# EUROPEAN PATENT APPLICATION

(11) **EP 4 250 394 A1**
(43) Date of publication of application: **27.09.2023**
(21) Application number: 21897090.3
(22) Date of filing: 25.11.2021
(51) Int. Cl.: H01M 4/139, H01M 4/13, H01M 4/62

(54) **DISPERSING AGENT FOR LITHIUM ION BATTERY, PREPARATION METHOD THEREFOR, POSITIVE ELECTRODE SLURRY, AND LITHIUM ION BATTERY**

(30) Priority: 28.11.2020 CN 202011361712
(71) Applicant: BYD Company Limited, Shenzhen, Guangdong 518118 (CN)
(72) Inventor: YANG, Jixiang, Shenzhen, Guangdong 518118 (CN); CHEN, Yongkun, Shenzhen, Guangdong 518118 (CN); TANG, Fulan, Shenzhen, Guangdong 518118 (CN); ZHANG, Yanan, Shenzhen, Guangdong 518118 (CN); HAO, Rong, Shenzhen, Guangdong 518118 (CN)
(74) Representative: Arnold & Siedsma
(86) International application number: PCT/CN2021/133204
(87) International publication number: WO 2022/111590

(57) **Abstract**

A dispersant for a lithium ion battery and a preparation method thereof, a positive slurry, and a lithium ion battery are provided. The dispersant includes a structural unit A derived from N-vinylpyrrolidone, a structural unit B derived from a conjugated diene monomer, and a structural unit C derived from an organic acid monomer. The organic acid monomer includes one or more of an unsaturated sulfonic acid monomer, an unsaturated phosphoric acid monomer, and an unsaturated carboxylic acid monomer.

## Description

### CROSS REFERENCE TO RELATED APPLICATIONS

The present disclosure claims priority to Chinese Patent Application No. 202011361712.8, entitled "DISPERSANT FOR LITHIUM ION BATTERY AND PREPARATION METHOD THEREOF, POSITIVE SLURRY, POSITIVE PLATE, AND LITHIUM ION BATTERY" and filed on November 28, 2020. The entire content of the abovereferenced application is incorporated herein by reference.

### FIELD

The present disclosure relates to the technical field of lithium ion batteries, and more specifically, to a dispersant for a lithium ion battery and a preparation method thereof, a positive slurry, and a lithium ion battery.

### BACKGROUND

In response to increasing requirements for battery performance, increasing requirements are imposed on a manufacturing process of a positive slurry of a battery. Components of a positive slurry of a lithium ion battery mainly includes a positive active material, a conductive agent, a binder, and a solvent. On the one hand, a dispersion effect of a positive active material and a conductive agent in the positive slurry needs to be improved to improve the uniformity of a positive plate. On the other hand, a solid content of the positive slurry needs to be increased to improve the coating performance of the positive slurry and improve the yield and productivity of the positive plate. Increasing battery manufacturers add dispersant additives to the positive slurry. Adding dispersant additives to the positive slurry is a mainstream method in the industry to improve the dispersion effect and solid content of the positive slurry.

Few types of dispersants are applicable to existing lithium ion batteries, mainly including polyvinyl pyrrolidone (PVP) and polyacrylamide (PAM). However, these dispersants have a limited dispersion capability for the positive slurry, and are usually added at a large amount, which, however, correspondingly reduces a mass ratio of the positive active material in the positive material layer formed by the positive slurry, thus reducing a specific capacity of a battery. Therefore, dispersants having an excellent dispersion capability for the positive slurry need to be developed to achieve a desirable slurry dispersion effect with a small dosage of dispersant.

### SUMMARY

In view of the above, embodiments of the present disclosure provide a dispersant for a lithium ion battery and a preparation method thereof, a positive slurry, and a lithium ion battery. The dispersant for a lithium ion battery can improve a dispersibility and a solid content of a positive slurry while avoiding a reduction of a specific capacity of a battery caused by a reduction of a content of a positive active material.

In a first aspect, the present disclosure provides a dispersant for a lithium ion battery. The dispersant includes a structural unit A derived from N-vinylpyrrolidone, a structural unit B derived from a conjugated diene monomer, and a structural unit C derived from an organic acid monomer. The organic acid monomer includes one or more of an unsaturated sulfonic acid monomer, an unsaturated phosphoric acid monomer, and an unsaturated carboxylic acid monomer.

The structural unit B derived from the conjugated diene monomer is configured to provide a molecular skeleton function for the dispersant, and enables a molecular chain of the dispersant to have a certain flexibility. The N-vinylpyrrolidone is configured to provide the dispersant with the structural unit A that has strong affinity with a solvent of a positive slurry (such as N-methylpyrrolidone (NMP) or N, N-dimethylformamide (DMF)), to increase the solubility of the dispersant with the solvent of the positive slurry. The organic acid monomer is configured to enable the dispersant to have the structural unit C with polar groups such as carboxyl, phosphate, and sulfonic groups, so that the dispersant may form hydrogen bonds, van der Waals forces, and the like with a surface of the positive active material. For example, the dispersant may form hydrogen bonds with phosphate groups on a surface of a positive active material such as lithium iron phosphate and lithium manganese iron phosphate, may form hydrogen bonds with hydroxyl groups on a surface of a ternary positive active material, and may form hydrogen bonds with functional groups such as hydroxyl and carboxyl groups on a surface of a conductive agent such as a carbon nanotube and graphene.

Therefore, the dispersant has amphipathicity, that is, has affinity to both the solvent and dispersed particles (positive active material particles, conductive agent particles, and the like). The dispersant can be easily adsorbed on surfaces of the dispersed particles and an interface of the solvent, thereby enabling the positive active material, the conductive agent, and the like to achieve excellent dispersion effects in the positive slurry of the lithium ion battery, and preventing the dispersed particles from reuniting again. In addition, a dispersion time is short, and a low dispersant dosage is required. In addition, the dispersant has desirable flexibility, which facilitates the amphipathicity thereof, and the flexibility can reduce an internal stress of particles in the positive plate, thereby improving the flexibility of the positive plate and facilitating assembly of the positive plate into a battery.

In some implementations of the present disclosure, the dispersant includes a copolymer including the structural unit A, the structural unit B, and the structural unit C. The copolymer may include any one of a random structure, a block structure, an alternating structure, and a graft copolymerization structure.

In some implementations of the present disclosure, based on a total amount of the dispersant, a molar proportion of the structural unit A is in a range of 30%-90%, a molar proportion of the structural unit B is in a range of 5 %-50%, and a molar proportion of the structural unit C is in a range of 1%-30%. In this way, the dispersant can have a certain affinity to solvents, a certain affinity to to-be-dispersed particles, and a certain flexibility, thereby achieving a desirable dispersion effect.

In some implementation of the present disclosure, a carbon atom number of the conjugated diene monomer is not less than 4, such as 4-12. Exemplarily, the conjugated diene monomer may include one or more of 1,3-butadiene, isoprene, 2,3-dimethyl-1,3-butadiene, 2-chloro-1,3-butadiene, 1,3-pentadiene, 1,3-hexadiene, 1,3-decadiene, and 2-methyl-1,5-heptadiene.

In some implementation of the present disclosure, exemplarily, the unsaturated sulfonic acid monomer may include one or more of vinyl sulfonic acid and salts thereof, allyl sulfonic acid and salts thereof, methylallyl sulfonic acid and salts thereof, 2-acrylamide-2-methylpropane sulfonic acid and salts thereof, styrene sulfonic acid and salts thereof, 3-allyloxy-2-hydroxypropane sulfonic acid and salts thereof, 2-methyl-2-acrylate-2-sulfonic ethyl ester and salts thereof, 3-sulfopropyl acrylate and salts thereof, and 3-sulfopropyl methacrylate and salts thereof. In some implementations of the present disclosure, the unsaturated sulfonic acid monomer may include one or more of sodium allyl sulfonate (CAS No.: 2495-39-8), sodium methylallyl sulfonate (1561-92-8), 2-acrylamide-2-methylpropane sulfonate, sodium styrene sulfonate, sodium 3-allyloxy-2-hydroxy-1-propanesulfonate (CAS No.: 52556-42-0), 2-methyl-2-acrylic acid-2-sulfonate ethyl ester (CAS No.: 10595-80-9), potassium 3-sulfopropyl methacrylate (CAS No.: 31098-21-2), and potassium 3-sulfopropyl acrylate (CAS No.: 31098-20-1).

In some implementation of the present disclosure, the unsaturated phosphoric acid monomer as an example may include one more of vinyl phosphonic acid (CAS No.: 1746-03-8), (1-phenylvinyl) phosphonic acid (CAS No.: 3220-5-6), allyl phosphonic acid (CAS No.: 6833-67-6), bis[2-(methacryloxy)ethyl] phosphoric acid (CAS No.: 32435-46-4), 2-(methacryloxy)ethyl-2-(trimethylamino)ethyl phosphate (CAS No.: 67881-98-5), and 2-methyl-2-propenoic acid 2-(phosphonooxy)ethyl ester (24599-21-1), but is not limited thereto.

In some implementation of the present disclosure, the unsaturated carboxylic acid monomer may include one or more of acrylic acid, methacrylic acid, 2-ethylacrylic acid, α-acetoxyacrylic acid, butenoic acid, crotonic acid, maleic acid, itaconic acid, and fumaric acid, but is not limited thereto.

In some implementations of the present disclosure, the organic acid monomer is an unsaturated sulfonic acid monomer and/or an unsaturated phosphoric acid monomer. Compared to an unsaturated carboxylic acid monomer, phosphate and sulfonic groups contributed by the two organic acid monomers can more easily form hydrogen bonds with the positive active material, and have a large van der Waals force with the positive active material, thereby enabling the dispersant to have more desirable dispersion effects on the positive active material, the conductive agent, and the like.

In some implementations of the present disclosure, the dispersant is polymerized from a monomer raw material including the N-vinylpyrrolidone, the conjugated diene monomer, and the organic acid monomer. In some other implementations of the present disclosure, the dispersant may be obtained by polymerizing and then hydrogenating the monomer raw material. Hydrogenation of the polymer polymerized from the monomer raw material can reduce double bonds in the polymer polymerized from the monomer raw material, thereby enhancing the antioxidant ability of the dispersant at a high voltage.

In some implementation of the present disclosure, a weight average molecular weight of the dispersant is in a range of 5000-100000. The dispersant with the weight average molecular weight in the range can have desirable mechanical properties such as stiffness and desirable flexibility, thereby facilitating subsequent processing and utilization. In some implementations of the present disclosure, the weight average molecular weight of the dispersant is in a range of 10000-90000, such as 20000, 30000, 35000, 40000, 45000, 50000, 55000, 60000, 70000, 80000, or 85000.

According to the dispersant provided in the first aspect of the present disclosure, an extremely low amount of dispersant can achieve a desirable dispersion effect of the positive active material and the conductive agent in the positive slurry of the lithium ion battery within a short time, and enables the positive slurry to have a high solid content, which can improve the preparation efficiency, product yield, flexibility, and the like of the positive plate without significantly reducing the mass ratio of positive active materials in the positive plate.

In a second aspect, the present disclosure provides a method for preparing a dispersant for a lithium ion battery, including: performing a polymerization reaction on a monomer raw material including N-vinylpyrrolidone, a conjugated diene monomer, and an organic acid monomer.

In some implementations of the present disclosure, the preparation method further includes: performing a hydrogenation reaction on the polymer formed through the polymerization reaction of the monomer raw material. In other words, in this case, the method for preparing a dispersant includes: performing the polymerization reaction on the monomer raw material to obtain a dispersant precursor, and performing a hydrogenation reaction on the dispersant precursor. The hydrogenation reaction can reduce some or all double bonds in the dispersant precursor obtained through the polymerization reaction of the monomer raw material, thereby enhancing the antioxidant ability of the dispersant at a high voltage.

In some implementations of the present disclosure, the hydrogenation reaction may be performed by using Pt as a catalyst and hydrogen as a reducing agent.

In some implementations of the present disclosure, based on a total mass of the monomer raw material, a proportion of the N-vinylpyrrolidone is in a range of 30%-90%, a proportion of the conjugated diene monomer is in a range of 5%-40%, and a proportion of the organic acid monomer is in a range of 1%-40%. The monomer raw material with such a proportion enables the prepared dispersant to have a more desirable dispersion capability. In some other implementations of the present disclosure, based on a total mass of the monomer raw material, a proportion of the N-vinylpyrrolidone is in a range of 45%-80%, a proportion of the conjugated diene monomer is in a range of 10%-30%, and a proportion of the organic acid monomer is in a range of 10%-30%.

The above polymerization reaction is not special specially defined, which may be, for example, solution polymerization, emulsion polymerization, suspension polymerization, or bulk polymerization. In some implementations of the present disclosure, the above polymerization reaction is the solution polymerization. The solution polymerization includes: dissolving the monomer raw material and an initiator in a solvent, performing polymerization at a specific temperature, and performing solid-liquid separation and drying on a resulting reaction liquid.

The initiator may be a thermal initiator and/or a photoinitiator. For example, the initiator is the thermal initiator. The thermal initiator may be one or more of aqueous initiators such as potassium persulfate, sodium persulfate, and ammonium persulfate, or may be one or more of oily initiators such as azobisisobutyronitrile, azobisisoheptonitrile, and benzoyl peroxide. In this case, a temperature of the polymerization reaction may be in a range of 40°C-80°C, and a time of the polymerization reaction may be in a range 2h-24h. The aqueous initiators or the oily initiators may be selected according to the monomer raw material and the solvent that is used.

In some implementations of the present disclosure, in the solution polymerization process, a chain transfer agent may be further added to the solvent to control a molecular chain length of the resulting polymer. Exemplary chain transfer agents may include ethyl acetate, butyl acetate, acetone, diethyl carbonate, methyl tertiary butyl ether, isopropanol, ethanol, methanol, dodecyl mercaptan, and the like.

The method for preparing a dispersant provided in the second aspect of the present disclosure is simple and easy in operation, requires low energy consumption, and has a controllable reaction degree, which is applicable to industrialized production.

A third aspect of the present disclosure further provides a positive slurry. The positive slurry includes a positive active material, a conductive agent, a binder, a dispersant, and a solvent. The dispersant is the dispersant described in the first aspect of the present disclosure or a dispersant prepared by using the preparation method described in the second aspect of the present disclosure.

An amount of existing dispersant (such as PVP) that may be used for a positive slurry usually needs to be more than 0.5% of a mass of the positive active material to achieve a desirable dispersion effect, which is usually in a range of 0.8% to 2%. However, a mass ratio of the positive active material in the positive slurry is greatly reduced. In this application, a mass of the dispersant does not exceed 0.4% of a mass of the positive active material. For example, the mass of the dispersant may be in a range of 0.1%-0.3% of the mass of the positive active material.

The above positive active material, binder, and conductive agent are conventional choices in the field of batteries. The binder may be selected from one or more of polyvinylidene fluoride (PVDF), polytetrafluoroethylene (PTFE), polyvinyl alcohol (PVA), styrene butadiene rubber (SBR), polyacrylonitrile (PAN), polyimide (PI), polyacrylic acid (PAA), polyacrylate, polyolefin, sodium carboxymethyl cellulose (CMC), and sodium alginate. The positive active material may be at least one of lithium iron phosphate, lithium manganese phosphate, lithium manganese iron phosphate, lithium vanadium phosphate, lithium cobalt phosphate, lithium cobalt oxide (LiCoO₂), lithium manganese oxide, lithium nickel oxide, lithium nickel cobalt oxide, lithium nickel manganese oxide, nickel cobalt manganese (NCM) ternary material, and nickel cobalt aluminum (NCA) ternary material. The conductive agent may include at least one of a carbon nanotube, carbon black, and graphene, but is not limited thereto. A surface of the conductive agent may have functional groups such as carboxylic groups or hydroxyl groups, to facilitate dispersion in the positive slurry. The dispersant has desirable affinity to both positive active material particles and binder particles.

The positive slurry provided in the third aspect of the present disclosure has a high solid content, especially a high content of the positive active material, and has desirable dispersibility, is unlikely to settle, and may be stored for a long time.

A fourth aspect of the present disclosure further provides a lithium ion battery. The lithium ion battery includes a positive plate. The positive plate includes a current collector and a positive material layer arranged on the current collector. The positive material layer includes a positive active material, a conductive agent, a binder, and a dispersant. The dispersant is the dispersant described in the first aspect of the present disclosure or a dispersant prepared by using the preparation method described in the second aspect of the present disclosure. The lithium ion battery further includes a negative plate and a membrane and an electrolyte located between the positive plate and the negative plate. It should be noted that the negative plate, the membrane, and the electrolyte are all conventional structures of a battery, and therefore are not described in detail herein. Due to the high content of positive active material in the positive plate, the battery can have a high specific capacity.

Further, the positive material layer may be formed by coating and drying the positive slurry described in the third aspect of the present disclosure. The positive slurry has a high solid content and a low solvent content, and can be dried in a short time to obtain the positive plate, which improves the preparation efficiency of the positive plate. Since the drying time is short, the positive plate is unlikely to crack, and the yield is high. In addition, the positive plate further has desirable flexibility and can be easily assembled into a battery.

### DETAILED DESCRIPTION

The following provides exemplary implementations of the present disclosure. It should be noted that a person of ordinary skill in the art may make several improvements and refinements without departing from the principles of the present disclosure. These improvements and refinements are considered to fall within the protection scope of the present disclosure.

The present disclosure is further described below through the following embodiments.

### Embodiment 1

A method for preparing a dispersant for a lithium ion battery includes:
dissolving N-vinylpyrrolidone, 1,3-butadiene, and vinyl phosphonic acid in N, N-dimethylformamide (DMF) at a mass ratio of 70:20:10, adding an initiator azobisisobutyronitrile and a chain transfer agent dodecyl mercaptan, performing polymerization at 60°C for 4 hours at a pressure of 4 MPa, performing cooling to terminate the reaction, washing and drying a resulting reactant to obtain a dispersant 1', and hydrogenating the dispersant 1' to obtain a dispersant 1. A weight average molecular weight of the dispersant 1 is measured as about 50000.

A method for preparing a positive plate includes: dissolving 2 g of binder PVDF in 40 g of N-methylpyrrolidone (NMP), and adding 0.3 g of the above dispersant 1 after full dissolution, and performing stirring for 20 min; adding 20 g of carbon nanotube dispersion (solvent: NMP, solid content: 5 wt%) and performing stirring for 20 min; adding 97 g of lithium iron phosphate positive active material and performing stirring for 1.5 h to obtain a positive slurry; and coating the positive slurry on aluminum foil and performing drying at 130°C for 30 min to form a positive material layer, thereby completing the production of a lithium iron phosphate positive plate.

### Embodiment 2

A method for preparing a dispersant for a lithium ion battery includes:
dissolving N-vinylpyrrolidone, 1,3-pentadiene, andbis[2-(methacryloxy)ethyl] phosphoric acid in dioxane at a mass ratio of 50:20:30, adding an initiator azobisisobutyronitrile and a chain transfer agent dodecyl mercaptan, performing polymerization at 60°C for 4 hours at a pressure of 4 MPa, performing cooling to terminate the reaction, and washing and drying a resulting reactant to obtain a dispersant 2. A weight average molecular weight of the dispersant 2 is measured as 10000.

In a method for preparing a positive plate, 0.3 g of dispersant 1 in Embodiment 1 is replaced with 0.3 g of dispersant 2, and other conditions are the same as those in Embodiment 1.

### Embodiment 3

A method for preparing a dispersant for a lithium ion battery includes:
dissolving N-vinylpyrrolidone, 1,3-hexadiene, and 2-ethylacrylic acid in dioxane at a mass ratio of 90:5:5, adding an initiator azobisisobutyronitrile and a chain transfer agent ethyl acetate, performing polymerization at 60°C for 4 hours at a pressure of 4 MPa, performing cooling to terminate the reaction, and washing and drying a resulting reactant to obtain a dispersant 3. A weight average molecular weight of the dispersant 3 is measured as about 86000.

In a method for preparing a positive plate, 0.3 g of dispersant 1 in Embodiment 1 is replaced with 0.3 g of dispersant 3, and other conditions are the same as those in Embodiment 1.

### Embodiment 4

A method for preparing a dispersant for a lithium ion battery includes:
dissolving N-vinylpyrrolidone, isoprene, and vinyl sulfonic acid in DMF at a mass ratio of 65:30:5, adding an initiator azobisisobutyronitrile and a chain transfer agent dodecyl mercaptan, performing polymerization at 60°C for 4 hours at a pressure of 4 MPa, performing cooling to terminate the reaction, washing and drying a resulting reactant to obtain a dispersant 4', and hydrogenating the dispersant 4' to obtain a dispersant 4. A weight average molecular weight of the dispersant 4 is measured as about 22000.

A method for preparing a positive plate includes: dissolving 1 g of binder PVDF in 30 g of NMP, and adding 0.3 g of dispersant 4 after full dissolution, and performing stirring for 20 min; adding 10 g of carbon nanotube NMP dispersion (solid content: 5 wt%) and 1.5 g of carbon black as a conductive agent, and performing stirring for 20 min; adding 97 g of positive active material NCM622 (LiNi_{0.6}Co_{0.2}Mn_{0.2}O₂) and performing stirring for 1.5 h to obtain a positive slurry; and coating the positive slurry on aluminum foil and performing drying at 130°C for 30 min to form a positive material layer, thereby completing the production of an NCM ternary positive plate.

### Embodiment 5

A method for preparing a dispersant for a lithium ion battery includes:
dissolving N-vinylpyrrolidone, 1,3-butadiene, 2-acrylamide-2-methylpropane sulfonic acid in DMF at a mass ratio of 60:30:10, adding an initiator azobisisobutyronitrile and a chain transfer agent ethyl acetate, performing polymerization at 60°C for 4 hours at a pressure of 4 MPa, performing cooling to terminate the reaction, washing and drying a resulting reactant to obtain a dispersant 5', and hydrogenating the dispersant 5' to obtain a dispersant 5. A weight average molecular weight of the dispersant 5 is measured as about 40000.

In a method for preparing a positive plate, 0.3 g of dispersant 4 in Embodiment 4 is replaced with 0.3 g of dispersant 5, and other conditions are the same as those in Embodiment 4.

### Embodiment 6

A method for preparing a dispersant for a lithium ion battery includes:
dissolving N-vinylpyrrolidone, isoprene, and maleic acid in dioxane at a mass ratio of 50:35:15, adding an initiator azobisisobutyronitrile and a chain transfer agent dodecyl mercaptan, performing polymerization at 60°C for 4 hours at a pressure of 4 MPa, performing cooling to terminate the reaction, washing and drying a resulting reactant to obtain a dispersant 6', and hydrogenating the dispersant 6' to obtain a dispersant 6. A weight average molecular weight of the dispersant 6 is measured as 55000.

In a method for preparing a positive plate, 0.3 g of dispersant 4 in Embodiment 4 is replaced with 0.3 g of dispersant 6, and other conditions are the same as those in Embodiment 4.

The following comparative examples 1-4 are set up below to highlight the beneficial effects of the present disclosure.

### Comparative example 1

A main difference between a lithium iron phosphate positive plate in Comparative example 1 and that in Embodiment 1 is that no dispersant is added but a larger amount of solvent is used during the preparation of the lithium iron phosphate positive plate.

A method for preparing a lithium iron phosphate positive plate in Comparative example 1 includes: fully dissolving 2 g of binder PVDF in 50 g of NMP; adding 20 g of carbon nanotube NMP dispersion (solid content: 5 wt%), and performing stirring for 20 min; adding 97 g of lithium iron phosphate positive active material and performing stirring for 3 h to obtain a positive slurry; and coating the positive slurry on aluminum foil and performing drying at 130°C for 30 min to form a positive material layer, thereby completing the production of a lithium iron phosphate positive plate.

### Comparative example 2

A main difference between a lithium iron phosphate positive plate in Comparative example 2 and that in Embodiment 1 is that 1.0 g of the existing dispersant PVP is added during the preparation of the lithium iron phosphate positive plate.

A method for preparing a lithium iron phosphate positive plate in Comparative example 2 includes: dissolving 2 g of binder PVDF in 40 g of NMP, and adding 1.0 g of dispersant PVP after full dissolution, and performing stirring for 20 min; adding 20 g of carbon nanotube NMP dispersion (solid content: 5 wt%), and performing stirring for 20 min; adding 97 g of lithium iron phosphate positive active material and performing stirring for 1.5 h to obtain a positive slurry; and coating the positive slurry on aluminum foil and performing drying at 130°C for 30 min to form a positive material layer, thereby completing the production of a lithium iron phosphate positive plate.

### Comparative example 3

A main difference between a ternary positive plate in Comparative example 3 and that in Embodiment 4 is that no dispersant is added but a larger amount of solvent is used during the preparation of the NCM ternary positive plate.

A method for preparing a ternary positive plate in Comparative example 2 includes: fully dissolving 1 g of binder PVDF in 40 g of NMP; adding 10 g of carbon nanotube dispersion (5 wt%) and 1.5 g of carbon black as a conductive agent, and performing stirring for 20 min; adding 97 g of positive active material NCM622 (LiNi_{0.6}Co_{0.2}Mno.₂O₂) and performing stirring for 3 h to obtain a positive slurry; and coating the positive slurry on aluminum foil and performing drying at 130°C for 30 min to form a positive material layer, thereby completing the production of an NCM ternary positive plate.

### Comparative example 4

A main difference between a ternary positive plate in Comparative example 4 and that in Embodiment 4 is that 1.0 g of dispersant PVP is added during the preparation of the NCM ternary positive plate.

A method for preparing an NCM positive plate in Comparative example 4 includes: dissolving 1 g of binder PVDF in 30 g of NMP, and adding 1.0 g of dispersant PVP after full dissolution, and performing stirring for 20 min; adding 10 g of carbon nanotube dispersion (5 wt%) and 1.5 g of carbon black as a conductive agent, and performing stirring for 20 min; adding 97 g of positive active material NCM622 and performing stirring for 1.5 h to obtain a positive slurry; and coating the positive slurry on aluminum foil and performing drying at 130°C for 30 min to form a positive material layer, thereby completing the production of an NCM ternary positive plate.

In order to support the beneficial effects of the present disclosure, the observed viscosity and solid content of the positive slurry in each embodiment and comparative example, content of the positive active material in the positive material layer, and flexibility of the positive plate are summarized in the following Table 1.

**Table 1 Summary of results of embodiments and comparative examples**

| | Viscosity of positive slurry (mPa·s) | Solid content of positive slurry (%) | Content of positive active material in positive material layer (%) | Flexibility of positive plate |
|---|---|---|---|---|
| Embodiment 1 | 3280 | 63.0 | 96.7 | Aluminum foil exposed from the crease, opaque |
| Embodiment 2 | 3250 | 63.0 | 96.7 | Aluminum foil exposed from the crease, opaque |
| Embodiment 3 | 3370 | 63.0 | 96.7 | No aluminum foil exposed from the crease, opaque |
| Comparative example 1 | 3300 | 59.2 | 97.0 | Plate broken at the crease, transparent |
| Comparative example 2 | 3210 | 63.0 | 96.0 | Aluminum foil exposed from the crease, transparent |
| | | | | |
| Embodiment 4 | 2330 | 71.7 | 96.7 | No aluminum foil exposed from the crease, opaque |
| Embodiment 5 | 2110 | 71.7 | 96.7 | Aluminum foil exposed from the crease, opaque |
| Embodiment 6 | 2200 | 71.7 | 96.7 | Aluminum foil exposed from the crease, opaque |
| Comparative example 3 | 2120 | 66.8 | 97.0 | Plate broken at the crease, transparent |
| Comparative example 4 | 2070 | 71.7 | 96.0 | Aluminum foil exposed from the crease, transparent |

The viscosities of the positive slurries in the above Table 1 are measured by using a rheometer with a reference model of Anton Paar MCR 302. The flexibilities of the positive plates are obtained through visual observation after folding the positive plates in half in the same condition.

Through comparison between Embodiments 1-3 and Comparative example 1 and between Embodiments 4-6 and Comparative example 3, it may be learned from Table 1 that the viscosities of the positive slurries approximate each other, and the positive slurry including a small amount of dispersant provided in the embodiments of the present disclosure has a higher solid content and a shorter time is spent in producing a positive slurry with a desirable dispersion effect in a case that the content of the positive active material in the positive material layer is almost constant (or varies slightly). In addition, it may be learned through comparison between Embodiments 1-3 and Comparative example 2 and between Embodiments 4-6 and Comparative example 4 that when the positive slurries have the same solid content, an amount of PVP added is far greater than that of the dispersant provided in the embodiments of the present disclosure, which causes a proportion of active substances in the positive material layer in the corresponding comparative example to be less, thus subsequently reducing a specific capacity of a battery. The results indicate that the dispersant provided in the present disclosure has a high dispersion capability for the positive slurry. Moreover, compared with the positive plate in the corresponding comparative example, the positive plate including the dispersant in the embodiments of the present disclosure has a larger flexibility, and is unlikely to crack and transmit light after being folded in half, which indicates that the positive plate in the embodiments of the present disclosure has desirable processing performance.

The foregoing embodiments show only several implementations of the present disclosure and are described in detail, which, however, are not to be construed as a limitation to the patent scope of the present disclosure. It should be noted that a person of ordinary skill in the art may make several transformations and improvements can be made without departing from the idea of the present disclosure. The transformations and improvements belong to the protection scope of the present disclosure. Therefore, the protection scope of the patent of the present disclosure shall be subject to the appended claims.

## Claims

1. A dispersant for a lithium ion battery, the dispersant comprising a structural unit A derived from N-vinylpyrrolidone, a structural unit B derived from a conjugated diene monomer, and a structural unit C derived from an organic acid monomer, wherein the organic acid monomer comprises one or more of an unsaturated sulfonic acid monomer, an unsaturated phosphoric acid monomer, and an unsaturated carboxylic acid monomer.

2. The dispersant according to claim 1, wherein based on a total amount of the dispersant, a molar proportion of the structural unit A is in a range of 30%-90%, a molar proportion of the structural unit B is in a range of 5%-50%, and a molar proportion of the structural unit C is in a range of 1%-30%.

3. The dispersant according to claim 1 or 2, wherein the unsaturated sulfonic acid monomer comprises one or more of vinyl sulfonic acid, allyl sulfonic acid, methylallyl sulfonic acid, 2-acrylamide-2-methylpropane sulfonic acid, styrene sulfonic acid, 3-allyloxy-2-hydroxypropane sulfonic acid, 2-methyl-2-acrylate-2-sulfonic ethyl ester, 3-sulfopropyl acrylate, 3-sulfopropyl methacrylate, and salts thereof;
the unsaturated phosphoric acid monomer comprises one or more of vinyl phosphonic acid, (1-phenylvinyl) phosphonic acid, allyl phosphonic acid, bis[2-(methacryloxy)ethyl] phosphoric acid, 2-(methacryloyloxy)ethyl 2-(trimethylammonio)ethyl phosphate, and 2-methyl-2-propenoic acid 2-(phosphonooxy)ethyl ester; and
the unsaturated carboxylic acid monomer comprises one or more of acrylic acid, methacrylic acid, 2-ethylacrylic acid, α-acetoxyacrylic acid, butenoic acid, crotonic acid, maleic acid, itaconic acid, and fumaric acid.

4. The dispersant according to any of claims 1 to 3, wherein the conjugated diene monomer comprises one or more of 1,3-butadiene, isoprene, 2,3-dimethyl-1,3-butadiene, 2-chloro-1,3-butadiene, 1,3-pentadiene, 1,3-hexadiene, 1,3-decadiene, and 2-methyl-1,5-heptadiene.

5. The dispersant according to any of claims 1 to 4, wherein a weight average molecular weight of the dispersant is in a range of 5000-100000.

6. A method for preparing a dispersant for a lithium ion battery, comprising:
performing a polymerization reaction on a monomer raw material comprising N-vinylpyrrolidone, a conjugated diene monomer, and an organic acid monomer to obtain the dispersant for a lithium ion battery, wherein the organic acid monomer comprises one or more of an unsaturated sulfonic acid monomer, an unsaturated phosphoric acid monomer, and an unsaturated carboxylic acid monomer.

7. The method according to claim 6, wherein the preparation method further comprises: performing a hydrogenation reaction on the polymer formed through the polymerization reaction of the monomer raw material.

8. The method according to claim 6 or 7, wherein based on a total mass of the monomer raw material, a proportion of the N-vinylpyrrolidone is in a range of 30%-90%, a proportion of the conjugated diene monomer is in a range of 5%-40%, and a proportion of the organic acid monomer is in a range of 1%-40%.

9. A positive slurry, comprising a positive active material, a conductive agent, a binder, a dispersant, and a solvent, wherein the dispersant is the dispersant according to any of claims 1 to 5 or a dispersant prepared by using the method according to any of claims 6 to 8.

10. The positive slurry according to claim 9, wherein a mass of the dispersant does not exceed 0.4% of a mass of the positive active material.

11. A lithium ion battery, comprising a positive plate, wherein the positive plate comprises a current collector and a positive material layer arranged on the current collector; the positive material layer comprises a positive active material, a conductive agent, a binder, and a dispersant; and the dispersant is the dispersant according to any of claims 1 to 5 or a dispersant prepared by using the method according to any of claims 6 to 8.
